(19) Europäisches Patentamt
European Patent Office
Office européen des brevets

(11) **EP 3 139 274 B1**

(12) **EUROPÄISCHE PATENTSCHRIFT**

(45) Veröffentlichungstag und Bekanntmachung des Hinweises auf die Patenterteilung:
**22.04.2020   Patentblatt 2020/17**

(51) Int Cl.:
*G06F 9/50* *(2006.01)*     *G06Q 10/06* *(2012.01)*

(21) Anmeldenummer: **16186722.1**

(22) Anmeldetag: **31.08.2016**

(54) **VERFAHREN ZUM ERMITTELN EINER NETTO-DURCHLAUFZEIT ZWISCHEN PROZESSSCHRITTEN EINER PROZESSINSTANZ**

METHOD FOR DETERMINING A NET LEAD TIME BETWEEN PROCESS STAGES OF A PROCESS INSTANCE

PROCEDE DE DETERMINATION D'UN DELAI D'EXECUTION NET ENTRE DES ETAPES DE PROCESSUS D'UNE INSTANCE DE PROCESSUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2015   US 201514846469**

(43) Veröffentlichungstag der Anmeldung:
**08.03.2017   Patentblatt 2017/10**

(73) Patentinhaber: **Celonis SE**
**80333 München (DE)**

(72) Erfinder:
• **Klenk, Martin**
  **80639 München (DE)**
• **Rinke, Alexander**
  **80333 München (DE)**
• **Nominacher, Bastian**
  **80539 München (DE)**

(74) Vertreter: **2s-ip Schramm Schneider Bertagnoll Patent- und Rechtsanwälte Part mbB**
**Postfach 86 02 67**
**81629 München (DE)**

(56) Entgegenhaltungen:
• ANONYMOUS: "Introduction to Parallel Computing", INTERNET CITATION, 11. Oktober 2004 (2004-10-11), XP002399731, Gefunden im Internet:
URL:http://web.archive.org/web/20041011094500/http://www.llnl.gov/computing/tutorials/parallel_comp/ [gefunden am 2006-09-20]

• "CHAPTER 2: Database System Concepts and Architecture ED - Elmasri R; Navathe S B (Eds)", 1 January 2011 (2011-01-01), FUNDAMENTALS OF DATABASE SYSTEMS (SIXTH EDIT,, PAGE(S) 29 - 55, XP009171284, ISBN: 978-0-13-608620-8
• "CHAPTER 19: Algorithms for Query Processing and Optimization ED - Ramez Elmasri; Shamkant B Navathe (eds)", 1 January 2011 (2011-01-01), FUNDAMENTALS OF DATABASE SYSTEMS (SIXTH EDIT, ADDISON-WESLEY, PAGE(S) 679 - 725, XP009171423, ISBN: 978-0-13-608620-8
• "CHAPTER 18: Indexing Structures for Files ED - Ramez Elmasri; Shamkant B Navathe (eds)", 1 January 2011 (2011-01-01), FUNDAMENTALS OF DATABASE SYSTEMS (SIXTH EDIT, ADDISON-WESLEY, PAGE(S) 631 - 675, XP009171422, ISBN: 978-0-13-608620-8
• "CHAPTER 4: Basic SQL ED - Ramez Elmasri; Shamkant B Navathe (eds)", 1 January 2011 (2011-01-01), FUNDAMENTALS OF DATABASE SYSTEMS (SIXTH EDIT, ADDISON-WESLEY, PAGE(S) 87 - 114, XP009171302, ISBN: 978-0-13-608620-8
• "CHAPTER 26: Enhanced Data Models for Advanced Applications ED - Ramez Elmasri; Shamkant B Navathe (eds)", 1 January 2011 (2011-01-01), FUNDAMENTALS OF DATABASE SYSTEMS (SIXTH EDIT, ADDISON-WESLEY, PAGE(S) 931 - 991, XP009171525, ISBN: 978-0-13-608620-8

- **W. M.P. Van Der Aalst: "Process Mining Discovery, Conformance and Enhancement of Business Processes" In: "Process Mining Discovery, Conformance and Enhancement of Business Processes", 1 January 2011 (2011-01-01), Springer, XP055542593,**

**Beschreibung**

Gebiet der Erfindung

Die Erfindung betrifft ein flexibles Verfahren zur Verarbeitung, Rekonstruktion und Analyse realer Unternehmensprozesse auf Basis von durch Prozessinstanzen erzeugten Eventdaten. Ziel ist es, einen Ist-Zustand einzelner oder mehrere Prozesse überwachen, analysieren und visualisieren zu können.

Stand der Technik und Hintergrund der Erfindung

Es ist bekannt, Business Prozesse auf Basis digitaler Spuren in IT-Systemen zu analysieren. Die Gesamtheit der in einem IT-System gespeicherten Prozessschritte ergibt einen Prozess, der rekonstruiert werden kann. So können beispielsweise die Transaktionen aus ERP-Systemen dargestellt werden.

Die Analyse der Daten erfolgt nicht in den Quell-Systemen (z.B. dem ERP-System), sondern in einer von den Quell-Systemen getrennten Datenbasis. Gemäß einem sogenannten ETL-Prozess werden die Daten aus den Quell-Systemen extrahiert, die extrahierten Daten werden transformiert und die transformierten Daten werden in einer Datenbank gespeichert. Die Analyse der Prozesse wird dann auf der in dieser Datenbank gespeicherten Datenbasis durchgeführt. Beispielsweise beschreibt W. Van Der Aalst: "Process Mining Discovery, Conformance and Enhancement of Business Processes" (2011) einen Arbeitsablauf, um von heterogenen Datenquellen zu Process-Mining-Ergebnissen zu gelangen.

Nachteilig bei den aus dem Stand der Technik bekannten Verfahren ist beispielsweise, dass die Analysemöglichkeiten auf Basis der durch die Instanzen des realen Prozesses erzeugten Daten (Prozessinstanzprotokolle) hinsichtlich der Flexibilität, der Performance sowie der Möglichkeit, beliebig komplexe Prozesse zu analysieren stark eingeschränkt sind. Es können nur fest vordefinierte Analysen durchgeführt werden. Die Analyse sehr komplexer, parallelläufiger Prozesse ist unscharf und die Performance der Algorithmen reicht nicht aus, um sehr große Datensätze mit mehreren hundert Millionen Instanzen zu verarbeiten.

Aufgabe der Erfindung

Aufgabe der Erfindung ist es, Lösungen bereitzustellen, die eine einfachere, verbesserte, flexiblere und effizientere Analyse potentiell parallel läufiger Prozesse beliebiger Komplexität ermöglichen.

Erfindungsgemäße Lösung

Diese Aufgabe wird erfindungsgemäß durch ein Verfahren gemäß den unabhängigen Ansprüchen gelöst. Vorteilhafte Ausgestaltungen und Weiterbildungen der Erfindung sind in den jeweiligen abhängigen Ansprüchen angegeben.

Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:

Fig. 1      ein Blockdiagramm eines erfindungsgemäßen Systems;

Fig. 2      eine Datenstruktur eines erfindungsgemäßen Prozessprotokolls;

Fig. 2 (a)   ein beispielhaft partitioniertes Prozessprotokoll;

Fig. 3      Daten, anhand der das Ermitteln von parallelen Unterprozessen basierend auf dem Prozessprotokoll erläutert wird;

Fig. 4      ein Blockdiagramm mit einer erfindungsgemäßen APE-Engine; und

Fig. 5      ein Beispiel eines visualisierten Prozesses.

Detaillierte Beschreibung der Erfindung

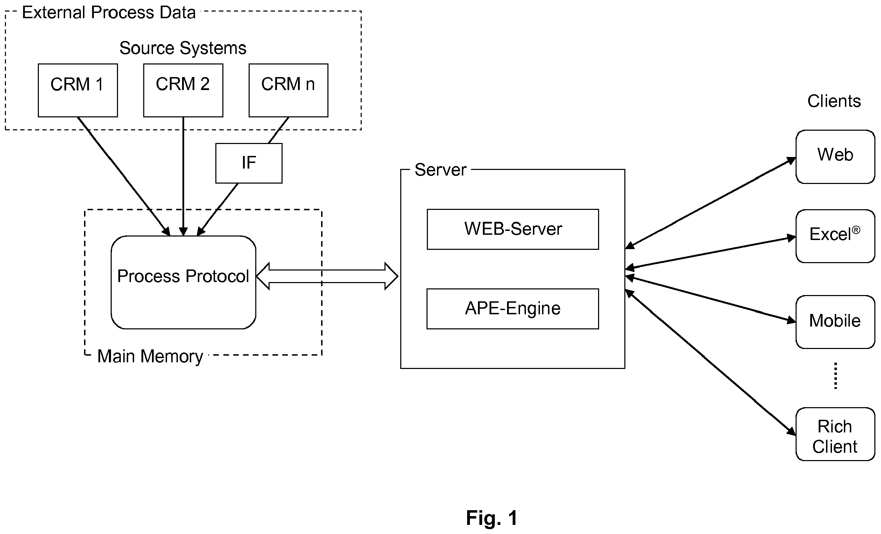

**Fig. 1** zeigt ein Blockdiagramm eines erfindungsgemäßen Systems, mit dem reale Prozesse (z.B. Geschäftsprozesse) ad hoc überwacht und gegebenenfalls visualisiert werden können. Änderungen in den Prozessen können ebenfalls ad hoc erfasst werden.

Nachfolgend wird die Analyse von Prozessprotokollen näher erläutert.

Werden reale Prozesse, wie Geschäftsprozesse, mit der Hilfe von einem oder mehreren IT Systemen ausgeführt, so hinterlassen die einzelnen Prozessinstanzen Datenspuren in den IT Systemen. Beispielsweise kann ein Produktionsprozess vielfältige Datenspuren in verschiedenen IT Systemen erzeugen (jedes produzierte Produkt, d.h. jede Prozessinstanz hinterlässt Spuren an unterschiedlichen Maschinen im bestandsführenden System etc.). Betrachten wir in diesem Beispiel die Spuren, die ein vollständiger Durchlauf des Produktionsprozesses (etwa ein fertig produziertes Produkt) in den IT Systemen hinterlässt, so enthalten diese Spuren viele Informationen über den tatsächlichen Verlauf des Prozesses. In jedem Produktionsschritt werden Zeitstempel erzeugt. Damit lässt sich beispielsweise nachvollziehen, zu welchem Zeitpunkt welcher Prozessschritt ausgeführt wurde. Daraus lässt sich unter anderem ableiten, welche Prozessschritte wie häufig und in welcher Reihenfolge ausgeführt wurden und wie viel Zeit zwischen den Produktionsschritten vergangen ist. Betrachten wir nun eine Vielzahl von Durchläufen des Produktionsprozesses und die Gesamtheit der Daten, die jeder Durchlauf in jedem Schritt des Prozesses hinterlassen hat, so erhalten wir das Prozessprotokoll. Bei Prozessen mit vielen Prozessschritten, die in unterschiedlichen IT Systemen ablaufen, kann dieses Prozessprotokoll sehr umfangreich werden und pro Prozessinstanz (d.h. für jeden Durchlauf des Prozesses) eine Vielzahl an Datensätzen enthalten. Auf Basis des Prozessprotokolls lassen sich nun verschiedene Fragestellungen zum tatsächlichen Prozessablauf untersuchen. Es kann zum Beispiel die Frage gestellt werden, wie homogen der Produktionsprozess ist (d.h., wie stark sich die einzelnen Durchläufe des Produktionsprozesses voneinander unterscheiden), wie der Kernprozess aussieht und welche Muster häufig zu Abweichungen vom Kernprozess führen.

Ein Prozessprotokoll bezeichnet also von den Instanzen eines realen Prozesses erzeugte Daten und liegt in einem oder mehreren IT Systemen verteilt vor.

Das Prozessprotokoll kann zusammengeführt und in einer Speichereinrichtung des Servers gespeichert sein. Alternativ kann das Prozessprotokoll auch in einer Speichereinrichtung gespeichert sein, die physikalisch vom Server getrennt ist. In beiden Fällen ist es erfindungsgemäß vorteilhaft, wenn das Prozessprotokoll In-Memory (im Arbeitsspeicher) gespeichert ist. Ferner ist es vorteilhaft, wenn das Prozessprotokoll spaltenorientiert in dem Arbeitsspeicher gespeichert wird.

Ziel der Erfindung ist es, beliebige Fragestellungen an das Prozessprotokoll zu beantworten, um sehr flexible Analysen für die tatsächlichen Unternehmensprozesse bereitzustellen.

Das erfindungsgemäße System umfasst eine Servereinrichtung (Server), die mit einer Anzahl von Clients koppelbar ist. Die Servereinrichtung ist ferner angepasst, auf ein Prozessprotokoll zuzugreifen.

Die Clients sind angepasst, Anfragen an den Server zu stellen und Antworten von dem Server zu empfangen. Die vom Client empfangenen Daten können aufbereitet und an einer Anzeigeeinrichtung zur Anzeige gebracht werden.

In einer vorteilhaften Ausgestaltung der Erfindung sind die Clients angepasst, die Anfragen an den Server in einer APE-Notation (APE-Anfragen) zu stellen (APE = Advanced Process Algebra Execution). Die Advanced Process Algebra Execution APE ist eine durch die Erfindung bereitgestellte Abfragesprache.

Im Folgenden wird die APE näher erläutert.

Das Prozessprotokoll hat die Eigenschaft, dass für jede Prozessinstanz eine unbestimmte Menge an (potentiell unterschiedlich strukturierten) Datensätzen aus den einzelnen Prozessschritten vorliegt. Für jede Instanz können also unterschiedlich viele Datensätze vorliegen (je nachdem, wie viele Prozessschritte die Instanz wie häufig durchlaufen hat).

Die APE ist angepasst, besonders einfach und effizient das Prozessprotokoll abzufragen, beispielsweise die in dem Prozessprotokoll gespeicherten Prozesse zu filtern, zu vergleichen oder zu rekonstruieren. Zudem stellt die APE die Möglichkeit zur Verfügung unterschiedlichste Abfragen flexibel zu definieren und dabei die Vorteile von sogenannten Prozessoperatoren und herkömmlichen Datenbankfunktionen flexibel miteinander zu kombinieren.

Die herkömmlichen Datenbankfunktionen (auch Datenbankoperatoren genannt) können umfassen: Aggregats-Funktionen (Average, Sum, etc.), häufig in Kombination mit Gruppierung; analytische Funktionen (Median, Quantile, etc.); Konvertierungs-Funktionen (String nach Datum, etc.); kryptographische Funktionen (Hashwert berechnen, Ver- und Entschlüsseln, etc.); Datums-Funktionen (Zeitdifferenzen berechnen, etc.); logische Funktionen; mathematische Funktionen; String-Funktionen (Left, Substring, etc.); Join-Operationen (Verknüpfung mehrerer Tabellen).

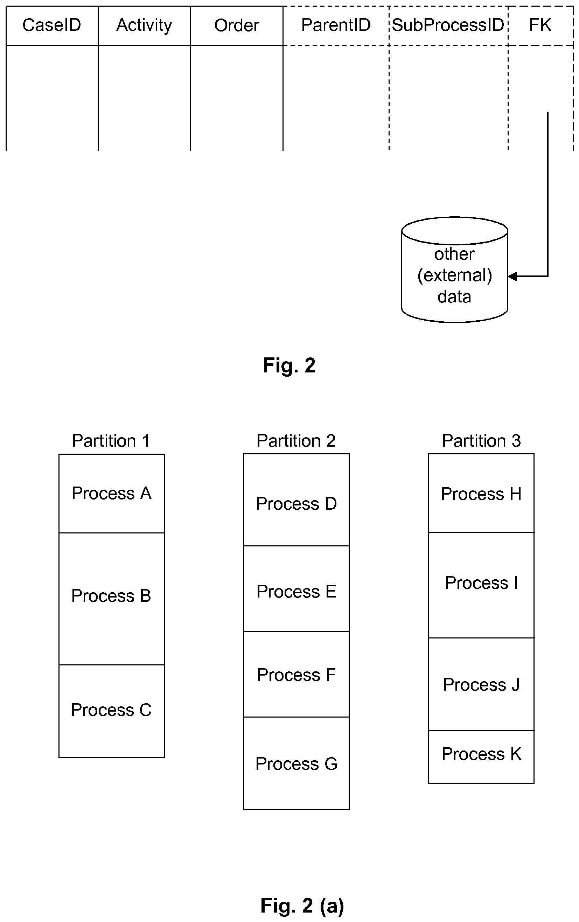

Erfindungsgemäß wird für die Analyse der Prozesse direkt auf das Prozessprotokoll zugegriffen. Aufgrund der erfindungsgemäßen Datenstruktur des Prozessprotokolls (vgl. Beschreibung zu Fig. 2) und der erfindungsgemäßen Abfragesprache APE werden unterschiedlichste ad hoc Analysen der Prozesse auch bei sehr großen Datenmengen effizient möglich.

Ein Prozessoperator ist ein Operator bzw. eine Funktion, die auf aus dem Prozessprotokoll rekonstruierte Prozesse angewandt wird und als Ergebnis ein Prozessprotokoll, eine Tabelle, einen Wert oder einen Graphen bereitstellen.

Beispiele für Prozessoperatoren sind:

- Matching (Ermitteln von Prozessinstanzen, die einem bestimmten Muster entsprechen);
- Rework (beispielsweise das Ermitteln von Häufigkeiten von bestimmten Aktivitäten in Prozessen);
- Loop Indicator (beispielsweise das Ermitteln von Häufigkeiten von Schleifen in Prozessen);
- Ermitteln von Prozessgraphen aus einer Anzahl von Prozessinstanzen;
- Prozessgraphen subtrahieren (beispielsweise das Ermitteln einer Differenz von zwei Prozessgraphen);
- Ermitteln von Durchlaufzeiten (beispielsweise die Durchlaufzeiten zwischen zwei vorbestimmten Prozessschritten in einer Anzahl von Prozessinstanzen);
- Extrahieren von Teilprozessen; und/oder
- Splitten von Prozessgraphen (beispielsweise anhand vorbestimmter Kriterien).
- Grouping, (beispielsweise Ermittlung eines Prozessgraphen nach einer Zusammenfassung bestimmter Prozessschritte)

Zunächst soll die Abfragesprache APE (Advanced Process Algebra Execution) formal definiert werden:
Die von APE unterstützten Prozessoperatoren implementieren eine Erweiterung zur relationalen Algebra. Grundlage der relationalen Algebra, die hier als bekannt vorausgesetzt wird, ist

$$\text{relation } R = \{(r_{1,1}, r_{1,2}, \ldots, r_{1,m}), \ldots, (r_{n,1}, r_{n,2}, \ldots, r_{n,m})\}$$

$$(r_{1,1}, \ldots, r_{1,m}) \ldots \quad (r_{n,1}, r_{n,2}, \ldots, r_{n,m}) \quad \text{tupel}$$

$$r_{1,1}, \ldots, r_{n,m} \quad \text{attributes}$$

Eine relationale Algebra benötigt als minimales System folgende Operationen:

- Projektion
- Selektion
- Kreuzprodukt
- Vereinigung
- Differenz und Umbenennung

Die relationale Algebra ist die Grundlage für relationale Datenbanksysteme und entsprechende Abfragesprachen (wie SQL). Da Prozessprotokoll und Prozessoperatoren nur mit großen Einschränkungen in einer relationalen Algebra abgebildet werden können, wird diese Algebra für die APE erfindungsgemäß erweitert.

Das Prozessprotokoll wird dabei wie folgt beschrieben:
Sei

$$R = \{(r_{1,1}, r_{1,2}, \ldots), \ldots (r_{n,1}, r_{n,2}, \ldots)\}$$

eine Relation.

Ein Prozessprotokoll sei dann definiert als Prozess-Relation

$$\{E_1, E_2, \ldots, E_k\}, E_i \subset R$$

$$\forall i, j | i \neq j : E_i \cap E_j = \emptyset$$

$$\bigcup_i E_i = R$$

Außerdem existiert für jedes Teil-Prozessprotokoll eine Ordnungsrelation:

$$O_i = (E_i, Q_i)$$

mit

O_i...geordnete Menge sowie
Q_i...Ordnungsrelation über E_i.

Damit ist das Prozessprotokoll definiert als

$$\mathrm{E} := \bigcup_i O_i$$

Die Mengen $E_i$ werden auch Fall oder Prozessinstanz genannt.

Die Prozessinstanzen sind selbst Relationen und als solche mit allen relationalen Operatoren kompatibel.

Als Basisprozessoperatoren sind nun folgende drei Operatoren definiert:

1) Case Selektion

Prädicate $\phi$: E → {0,1}
Case Selection: $CS_\phi$: E → E'

$$\mathrm{E}' := \left\{ \bigcup_i O_i \,\middle|\, O_i \in \mathrm{E} \land \phi(O_i) = 1 \right\}$$

Beispiele für Case Selektions-Operatoren sind zum Beispiel der Matching Operator zur Filterung von Prozessinstanzen, die einem bestimmten Prozessmuster entsprechen.

2) Crop Selection

Startprädikat $\rho_s$: R → {0,1}
Endprädikat $\rho_e$: R → {0,1}
Crop-Case $CC_{\rho_s,\rho_e}$: $O_i \to O_i'$

$$O_i' = (\{e \mid e \in E_i \land \exists e_s \in E_i : \rho_s(e_s) = 1 \land \exists e_e \in E_i : \rho_e(e_e) = 1 \land e_s \leq e$$
$$\leq e_e\}, Q_i)$$

Crop-Selection $CS_{\rho s,\rho e}$: E → E'

$$E' = \left\{ CC_{\rho_s,\rho_e}(O_i) \,\middle|\, O_i \in \mathrm{E} \right\}$$

Ein Beispiel hierfür ist, den Ausschnitt eines Prozessprotokolls zwischen einer definierten Start- und einer definierten Endaktivität auszuschneiden, um hieraus ein neues Teil-Prozessprotokoll zu erhalten.

Erweiterungen hierbei sind jeweils, dass das Prädikat zum ersten Mal erfüllt wird und zum letzten Mal erfüllt wird. Es können außerdem mehrere Teil-Streams durch CROP extrahiert werden sowie dass lediglich die ersten und letzten Aktivitäten in der Ergebnismenge enthalten sein sollen.

Die Ordnungsrelation bleibt bei diesem Prädikat erhalten. Es entsteht also durch die Anwendung dieses Operators ein neues Prozessprotokoll.

3) Event Projektion

Projektion $\delta: R \rightarrow R \circ R$

$$\delta(r) = r \circ r_n | r \in E_i \wedge r_n \in E_i \wedge r < r_n \wedge \nexists r_z : r < r_z$$

$< r_n$ auf Ordnungsrelation $Q_i$

$$\gamma(O_i) = (\{\delta(e) | e \in E_i\}, \{(\delta(q_s, q_e) | (q_s, q_e) \in Q_i\})$$

Event-Projektion $\Omega: E \rightarrow E'$

$$\Omega(E) = \{ \gamma(O) | O \in E \}$$

Diese Projektion erstellt aus einem Prozessprotokoll ein neues Prozessprotokoll, indem benachbarte Einträge miteinander verkettet werden. Ein Anwendungsbeispiel hierfür ist die Verwendung zur Berechnung von Durchlaufzeiten.

Auf Basis der erfindungsgemäßen Erweiterung der relationalen Algebra zur Prozessalgebra können in der APE mit Hilfe einer Kombination von Basisprozessoperatoren eine Vielzahl von Prozessoperatoren abgebildet werden. Darüber hinaus stehen alle Operatoren, die auf der relationalen Algebra definiert sind, weiter zur Verfügung. Prozessoperatoren und herkömmliche Datenbankoperatoren können dadurch frei kombiniert werden.

Die APE-Engine ist angepasst, von einem Client APE-Statements entgegenzunehmen, die entgegengenommenen APE-Statements zu verarbeiten und Ergebnisse der Verarbeitung zur Verfügung stellen. Die Ergebnisse können gegebenenfalls einer Nachverarbeitung unterzogen werden, bevor sie an den Client zurückgegeben werden.

Alternativ oder zusätzlich können die Ergebnisse der APE-Engine zur Verfügung gestellt werden, um beispielsweise basierend auf den Ergebnissen weitere Analysen durchzuführen (z.B. die Ergebnisse weiter einzuschränken). Auch in diesem Fall können die Ergebnisse einer Nachverarbeitung unterzogen werden, bevor sie der APE-Engine zur Verfügung gestellt werden.

Beispielhaft betrachten wir ein Prozessprotokoll aus einem Beschaffungsprozess mit folgender Struktur:

| Order ID | Event | Timestamp | Vendor |
|----------|-------|-----------|--------|
| 1 | Create Purchase Order | 06.01.2012 11:01 | ABC Machine Inc |
| 1 | Approve Purchase Order | 07.03.2012 14:07 | ABC Machine Inc |
| 1 | Enter Goods Receipt | 01.04.2012 16:05 | ABC Machine Inc |
| 1 | Enter Invoice Receipt | 01.04.2012 17:02 | ABC Machine Inc |
| 1 | Payment | 03.05.2012 11:17 | ABC Machine Inc |
| 2 | Create Purchase Order | 14.02.2012 04:48 | CDF Manufacturing |
| 2 | Rework Purchase Order | 20.03.2012 07:26 | CDF Manufacturing |
| 2 | Reject Purchase Order | 24.04.2012 01:26 | CDF Manufacturing |
| 3 | Create Purchase Order | 29.04.2012 15:21 | HIJ Insurance Corp |
| 3 | Approve Purchase Order | 30.04.2012 17:16 | HIJ Insurance Corp |
| 3 | Enter Invoice Receipt | 30.04.2012 23:31 | HIJ Insurance Corp |
| 3 | Payment | 01.05.2012 08:38 | HIJ Insurance Corp |
| 4 | Create Purchase Order | 06.02.2012 17:16 | ABC Machine Inc |
| 4 | Approve Purchase Order | 28.03.2012 07:12 | ABC Machine Inc |
| 4 | Enter Goods Receipt | 31.03.2012 08:52 | ABC Machine Inc |
| 4 | Enter Invoice Receipt | 05.04.2012 19:55 | ABC Machine Inc |

(fortgesetzt)

| Order ID | Event | Timestamp | Vendor |
|---|---|---|---|
| 4 | Payment | 10.04.2012 14:52 | ABC Machine Inc |
| 4 | Enter Invoice Receipt | 20.04.2012 23:02 | ABC Machine Inc |
| 4 | Payment | 29.04.2012 21:07 | ABC Machine Inc |

Die Prozessschritte bzw. Aktivitäten der Prozesse sind in dem Prozessprotokoll gespeichert, auf das die APE-Engine Zugriff hat. In dem Prozessprotokoll können zu jedem Prozessschritt auch Informationen zu dem jeweiligen Lieferanten gespeichert sein. Vorteilhaft ist es jedoch, wenn das Prozessprotokoll lediglich Referenzen zur den Lieferanteninformationen enthält, wobei die Lieferanteninformationen in einer externen Datenquelle gespeichert sein können (vgl. Fig. 2).

Nachfolgend ist ein Beispiel für ein APE-Statement (Statement in APE-Notation) wiedergegeben, mit dem für alle Lieferanten eine mittlere Durchlaufzeit der Prozesse zwischen den Aktivitäten "Create Purchase Order" und "Payment" berechnet werden kann, wobei zwischen diesen beiden Aktivitäten beliebig viele andere Aktivitäten vorkommen können. Da die Aktivitäten in einer Prozessinstanz potentiell mehrfach vorkommen können, betrachten wir jeweils das erste Vorkommnis der Aktivität "Create Purchase Order" und berücksichtigen alle Durchlaufzeiten zu einem beliebigen Vorkommen der Aktivität "Payment".

```
TABLE ("VENDOR",
    MEDIAN(
        CALC_THROUGHPUT(
            REMAP_TIMESTAMPS("TIMESTAMP", DAYS),
            FIRST_OCCURRENCE ['Create Purchase Or-
            der']
            TO ANY_OCCURRENCE ['Payment']
            )
        )
    )
```

Der Prozessoperator "Durchlaufzeiten" kann in der APE-Engine durch eine Kombination mehrerer Prozess-Basis-Operatoren implementiert werden:

- (Prozessoperator) Es wird das Prozessprotokoll durch eine CROP-Selektion auf die erste Aktivität "Create Purchase Order" sowie die letzte Aktivität "Payment" reduziert. Als Startprädikat wird hierbei
"Activity" = 'Create Purchase Order',
als Endprädikat wird hierbei
"Activity" = 'Payment'
verwendet.
- (DB-Operator) Es wird das Attribut " TIME S TAMP " auf einen tagesbasierten Zeitstempel umgerechnet.
- (Prozessoperator) Es wird eine Event Projektion ausgeführt. Im Ergebnis wird dadurch eine neue Relation gebildet, in der jeweils auf das Vorgänger- und Nachfolger-Event als Tupel der Ergebnisrelation zugegriffen werden kann.
- (DB-Operator) Es wird der tagesbasierte Zeitstempel des Nachfolger-Events vom Zeitstempel des Vorgängerevents subtrahiert.
- (DB-Operator) Es wird eine Gruppierung der berechneten Durchlaufzeiten nach dem Attribut "VENDOR" mit dem Aggregator "MEDIAN" ausgeführt.

Erfindungsgemäß ist es also möglich, Operatoren, die auf Prozessprotokolle angewandt werden, mit Operatoren, die auf herkömmlichen Tabellen angewandt werden, zu kombinieren.

Das Ergebnis der vorstehenden Abfrage wird in diesem Beispiel in Tabellenform zurückgegeben, um es beispielsweise als Tabelle am Client anzuzeigen. Das Ergebnis kann erfindungsgemäß auch in einem anderen Format zurückgegeben werden, z.B. als Graph, als Diagramm, als Prozess-Stream, etc.

In diesem Fall wäre das Ergebnis also:

| Vendor | Median |
|---|---|
| ABC Machine Inc | 83 |

(fortgesetzt)

| Vendor | Median |
|---|---|
| HIJ Insurance Corp | 2 |

Wir betrachten einige weitere Beispiele für APE Abfragen.

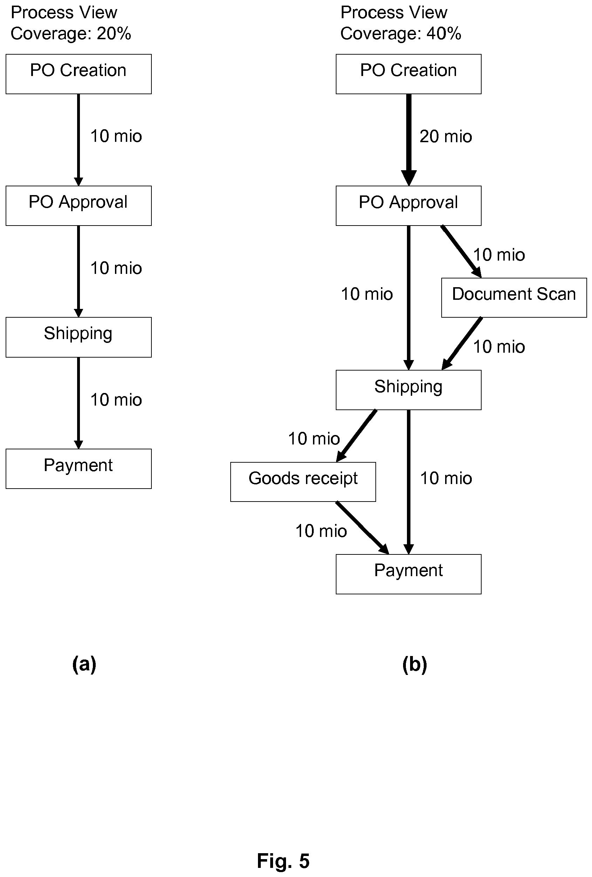

**Fig. 5** zeigt ein Beispiel eines visualisierten Prozesses. In dem Prozessprotokoll sind beispielsweise 50 Mio. Aktivitäten gespeichert, die jeweils einem Prozess zugeordnet sind.

Mit Hilfe einer ersten APE-Abfrage werden nun die durchschnittlichen Durchlaufzeiten aller Prozesse ermittelt, die mit der Aktivität "Create Purchase Order" beginnen und mit der Aktivität " Payment" enden und die eine Abdeckung von 20% aufweisen. D.h. es werden jene Prozessvarianten in dem Prozessprotokoll abgefragt, die zusammen 20% aller Prozesse in dem Prozessprotokoll ausmachen.

Folgende APE-Abfrage kann verwendet werden, um diese Berechnung auszuführen:

```
FILTER
    MATCH_PROCESS (
        STARTING["Create Purchase Order"] AS "Start",
        ENDING["Payment"] AS "End"
        CONNECTED BY EVENTUALLY ["Start", "End"]
    ) = 1;
    VARIANT_TABLE =
    TABLE (
        VARIANT() AS V,
        CUME_DIST() AS R
    ) ;
    FILTER
    VARIANT_TABLE.R
    < 0.2;
    GRAPH ();
```

In diesem Beispiel wird zunächst das Prozessprotokoll auf Fälle eingeschränkt, die mit der Aktivität "Create Purchase Order" beginnen und mit der Aktivität "Payment" enden.

Hierzu wird der Prozessoperator "MATCH_PROCESS" verwendet.

Im zweiten Schritt wird eine temporäre Liste der Prozessvarianten sowie der kumulierten Verteilung für jede Prozessvariante bestimmt. Hierzu wird der Prozessoperator VARIANT() sowie der DB-Operator CUME_DIST() verwendet.

Erfindungsgemäß ist es möglich, Analyseergebnisse zur weiteren Filterung zu verwenden. Die APE-Engine erhält hierzu eine Referenz zwischen den Quellrelationen und den jeweiligen Ergebnissen. Im Beispiel wird die Verknüpfung zwischen der auf Varianten-Ebene aggregierten Tabelle VARIANT_TABLE sowie dem ursprünglichen Prozessprotokoll erzeugt. Hierdurch ist es möglich, im nächsten Schritt das Prozessprotokoll auf jene Fälle einzuschränken, deren Variante zu den häufigsten 20% gehören (Kumulierte Verteilung < 0.2).

Um den Prozessgraphen zur Anzeige zu bringen wird nun mit dem Prozessoperator GRAPH() ein Graph auf Basis des gefilterten Prozessprotokolls berechnet und zurück geliefert.

Der Prozessgraph für das Ergebnis dieser ersten Abfrage ist in Fig. 5 (a) gezeigt. In dem Prozessgraph wird zudem die Frequenz der Kantendurchläufe berechnet und angezeigt. Mit Hilfe der aus dem Stand der Technik bekannten Möglichkeiten kann diese Information nicht abgeleitet werden.

Der Benutzer ändert nun den Grad der Abdeckung auf 40%. Mit Hilfe einer zweiten APE-Abfrage wird nun die Frequenz der Kantendurchläufe aller Prozessinstanzen ermittelt, die mit der Aktivität "Create Purchase Order" beginnen und mit der Aktivität "Payment" enden und die eine Abdeckung von 40% aufweisen. Aufgrund der erfindungsgemäßen Datenstruktur (Prozessprotokoll das als Prozess-Stream verfügbar gemacht wird) und der erfindungsgemäßen Abfragesprache APE wird das Ergebnis in Echtzeit an der Anzeigeeinrichtung des Benutzers visualisiert. Der Prozessgraph für das Ergebnis dieser zweiten Abfrage ist in Fig. 5 (b) gezeigt. 40% aller Prozesse in dem Prozessprotokoll entsprechen dieser Prozessvariante. Die häufigste Prozessvariante wird hier durch fette Pfeile gekennzeichnet, wobei die Dicke der Pfeile im Verhältnis zur Anzahl der konkreten Prozesse steht.

Wird die Abdeckung auf 100% erhöht, dann werden alle verschiedenen Prozessvarianten der in dem Prozessprotokoll gespeicherten Prozesse angezeigt.

Erfindungsgemäß hat der Benutzer die Möglichkeit, z.B. bestimmte Filter auf die visualisierten Prozessvarianten anzuwenden. So kann er beispielsweise eine Aktivität (z.B. "Shipping") auswählen und alle Prozessvarianten aus dem Prozessprotokoll selektieren, die über die ausgewählte Aktivität laufen. Die vorangegangene APE-Abfrage müsste damit um folgenden Filter erweitert werden:

```
FILTER MATCH_PROCESS (NODE ["Shipping"]) = 1
```

Nachfolgend werden die erfindungsgemäße Architektur und die Datenstruktur näher beschrieben.

Bezug nehmend auf Fig. 1 kann der Zugriff der Clients auf den Server beispielsweise über das Internet oder ein Intranet erfolgen. Ein Client kann beispielsweise ein Computer mit einem Internet-Client sein. Alternativ kann als Client auch ein Anwendungsprogramm, beispielsweise eine Tabellenkalkulation vorgesehen sein, das über eine Schnittstelle auf den Server Zugriff hat. Ein Client kann auch als mobiles Endgerät ausgestaltet sein.

Der Server kann einen WEB-Server (z.B. Apache HTTP Server oder Microsoft Internet Information Server) aufweisen, der für die Abwicklung der Datenübertragung zwischen einem Internet-Client und dem Server vorgesehen ist.

Der Server umfasst des Weiteren die oben beschriebene APE-Engine. Die APE-Engine ist angepasst, APE-Anfragen entgegenzunehmen und diese in eine ausführbare Form umzuwandeln bzw. zu transformieren. Die ausführbare Form einer APE-Anfrage kann ein ausführbares Programm oder ein Skript sein. Dem Server oder der APE-Engine kann ein Cache-Speicher zugeordnet sein, um Zwischenergebnisse oder Teilergebnisse beim Ausführen des ausführbaren Programms oder des Skripts effizient speichern zu können.

Die für das Prozessprotokoll benötigten Daten können im Rahmen eines ETL-Prozesses aus einem oder mehreren Quellsystemen (CRM *1* bis CRM *n*) geladen und gemäß einer erfindungsgemäßen Datenstruktur als Prozessprotokoll gespeichert werden. Die Datenstruktur wird weiter unten näher beschrieben.

Vorzugsweise werden die Daten bzw. das Prozessprotokoll im Arbeitsspeicher (z.B. als In-Memory-Datenbank) gespeichert. Dadurch wird die Performance beim Auswerten der Prozesse nochmals deutlich verbessert. Die Quellsysteme können beispielsweise standardisierte ERP-Systeme (z.B. von SAP AG, Walldorf, Germany) oder proprietäre Systeme umfassen, die Prozessinstanzen eines oder mehrerer Geschäftsprozesse speichern.

Vorteilhaft ist es, wenn das Prozessprotokoll in mehrere annähernd gleich große Teile geteilt wird, wobei Prozesse immer vollständig ein einem Teil gespeichert sind. Dadurch wird eine Partitionierung des Prozessprotokolls erreicht, wobei die Partitionen parallel verarbeitet werden können.

Eine bespielhafte Partitionierung ist in Fig. 2 (a) gezeigt. Das Prozessprotokoll ist hier in drei annähernd gleichgroße Partitionen geteilt worden, die jeweils im Arbeitsspeicher gehalten werden.

Beim Laden aus den Quellsystemen werden alle für das Prozessprotokoll benötigten Daten geladen. Alternativ können die Daten auch inkrementell geladen werden. Das heißt, es werden nur jene Daten geladen, die sich in den Quellsystemen seit dem letzten Laden geändert haben oder neu hinzugekommen sind.

Ist ein direkter Zugriff auf eines oder mehrere Quellsysteme nicht möglich, kann eine Schnittstelle IF für den Zugriff auf die entsprechenden Quellsysteme vorgesehen werden.

**Fig. 2** zeigt eine Datenstruktur eines erfindungsgemäßen Prozessprotokolls.

In der einfachsten Ausgestaltung weist die Datenstruktur des Prozessprotokolls drei Attribute (Felder) auf, nämlich "CaseID", "Activity" und "Order".

Das Attribut "CaseID" ist eine eindeutige Kennung einer Prozessinstanz (z.B. eines konkreten Geschäftsprozesses). Das Attribut "Activity" beschreibt einen Prozessschritt einer Prozessinstanz. Das Attribut "Order" gibt die Reihenfolge der Prozessschritte innerhalb einer Prozessinstanz an.

Mit dem Attribut "CaseID" werden alle Prozessschritte einer konkreten Prozessinstanz zugeordnet. In einer Ausgestaltung der Erfindung kann das Attribut "CaseID" eine zusammengesetzte eindeutige Kennung (zusammengesetzter Schlüssel) sein.

Das Attribut "Activity" kann eine Kennung des Prozessschrittes speichern. Die Kennung kann beispielsweise eine Beschreibung des Prozessschrittes sein.

Die Attributswerte können komprimiert gespeichert werden, beispielsweise mit Hilfe eines Dictionary-Encoding Verfahrens.

Allgemein gibt das Attribut "Order" die Reihenfolge der Prozessschritte innerhalb einer Prozessinstanz an. In einer Ausgestaltung der Erfindung kann in dem Attribut "Order" ein Zeitpunkt (Datum/Uhrzeit) gespeichert sein, der angibt, zu welchem Zeitpunkt der entsprechende Prozessschritt ausgeführt wurde. Die Verwendung von Zeitpunkten (z.B. Timestamps) hat den Vorteil, dass damit Durchlaufzeiten der Prozesse berechnet werden können.

Erfindungsgemäß ist es vorgesehen, das Prozessprotokoll bzw. die darin gespeicherten Datensätze zunächst nach dem Attribut "CaseID" und dann nach dem Attribut "Order" zu sortieren.

Die Quelldaten (External Process Data), die ebenfalls Prozessdaten umfassen und in einer Datenbank oder auf sonstige Weise in einem externen System (Source Systems) gespeichert sein können, werden in den Arbeitsspeicher geladen und dann physikalisch im Arbeitsspeicher wie vorstehend erläutert sortiert. Das heißt, die zu einem Prozess gehörenden Prozessschritte sind im Arbeitsspeicher an benachbarten Adressen gespeichert.

Unter "Prozessprotokoll" ist nachfolgend immer das sortierte und im Arbeitsspeicher gespeicherte Prozessprotokoll gemeint. Dieses Prozessprotokoll wird nachfolgend auch als Prozess-Stream bezeichnet.

Die Sortierung der Prozessschritte innerhalb einer Prozessinstanz hat den Vorteil, dass die Prozessinstanzen in gruppierter Form vorliegen. Hierdurch können die Prozessschritte in einem Stream sequenziell und in der richtigen Reihenfolge verarbeitet werden. Zudem kann in vorteilhafter Weise eine Vorgänger/Nachfolger-Beziehung der Prozessschritte innerhalb einer Prozessinstanz berechnet werden.

Nachfolgend ist ein Beispiel eines Prozessprotokolls angegeben.

| CaseID | Activity | Order |
|--------|----------|-------|
| 1 | Create PO | 08:00 |
| 1 | Shipping | 10:00 |
| 1 | Payment | 11:00 |
| 2 | Create PO | 08:00 |
| 2 | Approve PO | 08:15 |
| 2 | Shipping | 08:30 |
| 2 | Payment | 09:00 |

Das Prozessprotokoll wird erfindungsgemäß spaltenorientiert in dem Arbeitsspeicher gespeichert, d.h. der Inhalt des Prozessprotokolls wird spaltenweise gespeichert.

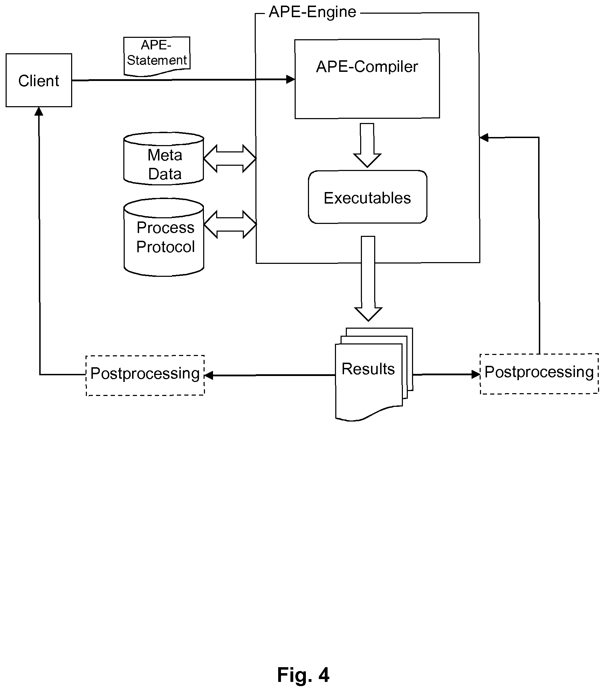

Die erfindungsgemäße Datenstruktur des Prozessprotokolls und die erfindungsgemäße Sortierung der Datensätze haben den Vorteil, dass mit der erfindungsgemäßen vorhergehend beschriebenen APE-Engine sowie der nachfolgend mit Bezug auf Fig. 4 näher beschriebenen Abfragesprache APE die Rekonstruktion von Prozessen und darauf angewandte Operationen in linearer Zeit ausgeführt werden können.

Zusätzlich oder alternativ kann die Datenstruktur des Prozessprotokolls eine oder mehrere Referenzen (Fremdschlüssel) zu externen Daten aufweisen. Diese Referenzen können in einem oder mehreren Attributen "FK" gespeichert werden. Damit ist es möglich, das Ergebnis einer Prozessanalyse mit zusätzlichen Daten anzureichern. Alternativ oder zusätzlich können Prozesse auch anhand der externen Daten gefiltert werden.

Externe Daten sind Daten, die nicht im Prozessprotokoll gespeichert sind. Diese Daten können im selben System gespeichert sein, wie das Prozessprotokoll. In einer Ausgestaltung der Erfindung können die externen Daten ebenfalls im Arbeitsspeicher gespeichert sein. Ein Beispiel für externe Daten sind die Stammdaten der an den Prozessen beteiligten Kunden.

**Fig. 4** zeigt ein Blockdiagramm mit einer erfindungsgemäßen APE-Engine. Anhand dieses Blockdiagramms wird eine mögliche Ausgestaltung der erfindungsgemäßen Abfragesprache APE näher beschrieben.

In einem ersten Schritt wird das entgegengenommene APE-Statement einem Parser des APE-Compilers übergeben. Der Parser parst das APE-Statement und erzeugt daraus einen abstrakten Syntaxbaum (AST), der nachfolgend für das vorstehende APE-Statement in vereinfachter Form wiedergegeben ist.

```
TABLE <CalculationType>
     VENDOR <Column>
     MEDIAN <Aggregate>
          CALC_THROUGHPUT (ANY ...) <ThroughputCalculation>
```

Der abstrakte Syntaxbaum stellt eine logische Abfolge der einzelnen Operationen bzw. Operatoren des APE-Statements dar.

Der abstrakte Syntaxbaum wird anschließend in einer In-Memory Ausführungsumgebung ausgeführt bzw. verarbeitet. Es kann vorteilhaft sein, den abstrakten Syntaxbaum vor der Ausführung in ein für die In-Memory Ausführungsumgebung brauchbares Format umzuwandeln. Ferner kann es vorteilhaft sein, den abstrakten Syntaxbaum vor der Ausführung zu optimieren, um beispielsweise die Ausführungszeit zu reduzieren.

Bei der Ausführung des abstrakten Syntaxbaums in der In-Memory Ausführungsumgebung wird zunächst anhand des abstrakten Syntaxbaums ein Ausführungsplan erzeugt, der anschließend zur Ausführung gebracht wird.

Nachfolgend wird beispielhaft das Erzeugen des Ausführungsplans beschrieben.

Der Ausführungsplan gibt die Schritte und die Reihenfolge an, in welcher die Operationen bzw. Operatoren von der APE Engine ausgeführt werden.

Beim Erzeugen des Ausführungsplans werden zunächst sämtliche Operatoren aus dem Syntaxbaum extrahiert und in dem Ausführungsplan als Referenzen zur Verfügung gestellt.

Der Ausführungsplan zu dem vorstehend genannten Syntaxbaum umfasst folgende Bestandteile:

```
1. Operatoren
   OP 1:
      Operator Type: COLUMN
      Operator Ref. ID: 1
      Column Name: VENDOR
   OP 2:
      Operator Type: Throughput Calculation
      Operator Ref. ID: 2
      Start: ANY ...
      End: ANY ...
      Time Units: Days
2. Aggregate (Ausführungsplan)
   GROUPERS: OP_REF 1
   AGGREGATORS:
      Aggregation Function: MEDIAN
      Aggregation Function Operator: OP_REF 2
```

"Operator Ref. ID" ist hierbei eine eindeutige Kennung des jeweiligen Operators, mit dem der Operator in dem Ausführungsplan referenziert werden kann (mittels "OP_REF").

In dem vorstehende Beispiel gibt der Operator "OP 1" in dem Ausführungsplan an, dass die Ergebnisse nach Lieferanten (Column Name: VENDOR) gruppiert werden sollen (GROUPERS: OP_REF 1). Der Operator "OP 2" gibt in dem Ausführungsplan an, dass eine Durchlaufzeit (Throughput Calculation) zwischen zwei Prozessschritten (Start / End) berechnet werden soll.

Wichtig ist hierbei, dass der Operator "OP 2" als normale Spalte einer Tabelle betrachtet wird, obwohl er unter Verwendung des Prozess-Streams berechnet wird.

Das Ausführen des Ausführungsplans wird anhand des nachfolgenden Beispiels beschrieben:

Beim Ausführen des Ausführungsplans werden zunächst alle Operatoren ausgeführt (in dem vorstehenden Beispiel die Operatoren "OP 1" und "OP 2").

Für den Operator "OP 1" wird einfach eine Referenz auf die Spalte "VENDOR" zurückgegeben. In der Spalte "VENDOR" sind Informationen zu den jeweiligen Lieferanten gespeichert.

Für den Operator "OP 2", der hier als "Throughput Operator" bezeichnet wird, wird ein Programmcode (Executable) erzeugt und zur Ausführung gebracht. Alternativ wird ein bereits bestehender Programmcode zur Ausführung gebracht. Für das vorliegende Beispiel ist der Programmcode angepasst, für die in dem Prozessprotokoll gespeicherten Prozesse die Durchlaufzeiten zwischen den Aktivitäten "Create Purchase Order" und "Payment" zu berechnen.

Nachdem beide Operatoren "OP 1" und "OP 2" ausgeführt wurden, stehen zwei Referenzen auf Spalten zur Verfügung, nämlich eine Referenz auf die Spalte "VENDOR" und eine Referenz auf die berechneten Durchlaufzeiten.

Im Anschluss daran können in einem optionalen Schritt Filter auf den Spalten angewandt werden, um beispielsweise in weiteren Berechnungsschritten nur solche Datensätze zu berücksichtigen, die ein bestimmtes Filterkriterium erfüllen.

Nachdem die Operatoren ausgeführt wurden, werden in einem nächsten Schritt die beiden Referenzen auf die erzeugten Spalten einem sogenannten Aggregationsautomaten übergeben. Der Aggregationsautomat ist angepasst, die berechneten Durchlaufzeiten nach Lieferanten zu gruppieren und für jeden Lieferanten eine mittlere Durchlaufzeit zu ermitteln.

Nachdem auch dieser letzte Schritt von der APE-Engine ausgeführt wurde, wird das Ergebnis des APE-Statements bzw. der APE-Abfrage dem Client zurückgegeben.

Alternativ oder zusätzlich kann das Ergebnis der APE-Engine als Eingabe für weitere APE-Abfragen zur Verfügung gestellt werden. Damit können verschachtelte Abfragen durchgeführt werden. Vorteilhaft ist es hierbei, wenn das Ergebnis der APE-Engine als Prozess-Stream bereitgestellt wird.

Vorstehend ist ein Beispiel einer APE-Abfrage beschrieben worden, bei der als Prozessoperator die Durchlaufzeit verwendet wurde. Erfindungsgemäß können auch andere Prozessoperatoren verwendet werden, die gegebenenfalls miteinander kombiniert werden können. Beispiele für solche Prozessoperatoren sind mit Bezug auf Fig. 1 angegeben.

Wie aus dem vorstehenden Beispiel einer APE-Abfrage ersichtlich ist, können in einer APE-Abfrage Prozessoperatoren auch mit Operatoren, die auf herkömmlichen Tabellen angewandt werden, und/oder mit herkömmlichen DB-Operatoren (z.B. Aggregationen, Joins, etc.) kombiniert werden.

Der Client nimmt das Ergebnis der APE-Abfrage entgegen und kann dieses an einer Anzeigeeinrichtung visualisieren. Wird das Ergebnis beispielsweise als Graph zurückgegeben, kann dieses als Prozessgraph zur Anzeige gebracht werden.

Die Berechnung von Durchlaufzeiten kann erfindungsgemäß auf Basis eines oder mehrerer Kalender durchgeführt werden, wie nachfolgend näher erläutert wird.

Die Berechnung von Durchlaufzeiten, insbesondere von Netto-Durchlaufzeiten, ist für eine explorative Analyse von Prozessprotokollen von hoher Bedeutung. Im Stand der Technik werden Durchlaufzeiten immer als Brutto-Durchlaufzeiten berechnet, was den Nachteil hat, dass die berechnete Durchlaufzeit nicht der geschäftsrelevanten Durchlaufzeit (zum Beispiel Servicezeiten, Lieferzeiten in Wochentagen, etc.) entspricht.

Im Folgenden wird ein beispielhaftes Verfahren zur Ad-Hoc Berechnung beliebiger Netto-Durchlaufzeiten angegeben:

Bei der Berechnung von Durchlaufzeiten auf Basis eines oder mehrerer Kalender ist es erfindungsgemäß möglich beispielsweise Feiertage, Wochenenden oder bestimmte Tageszeiten unberücksichtigt zu lassen.

Zur Bestimmung von Netto-Durchlaufzeiten zwischen Prozessschritten ist erfindungsgemäß das nachfolgend beschriebene Verfahren vorgesehen.

Das erfindungsgemäße Verfahren zur Berechnung von Netto-Durchlaufzeiten umfasst im wesentlich zwei Schritte, wobei in dem ersten Schritt die zu den Prozessschritten in dem Prozessprotokoll gespeicherten Zeitangaben relativ zu einer Basis transformiert (normiert) werden, und wobei in dem zweiten Schritt eine Differenz zwischen den den Prozessschritten zugeordneten transformierten Zeitangaben ermittelt wird. Bei den Zeitangaben kann es sich um Zeitstempel handeln.

Um die Zeitstempel zu transformieren bzw. zu normieren werden zunächst alle, vorzugsweise alle distinkten Zeitstempel, im Prozessprotokoll aufsteigend sortiert. Dieser Vektor (nachfolgend auch Zeitstempel-Vektor genannt) der aufsteigend sortierten Zeitstempel bildet die Ausgangsbasis für das Ermitteln eines Offsets für jeden (distinkten) Zeitstempel im Prozessprotokoll.

Jeder Zeitstempel kann aus einem Datum (z.B. 31.05.2014) und einer Zeitinformation (z.B. 13:37:00) mit einer gegebenen Präzision (beispielsweise in Sekunden) bestehen.

Die Zeitstempel werden nun so transformiert bzw. normiert, dass die Differenz zwischen jeweils zwei aufeinanderfolgenden transformierten Zeitstempel deren Netto-Differenz ihres Zeitunterschieds in der Zieleinheit (beispielsweise Tage, Stunden, ...) ist.

Für das Transformieren der Zeitstempel kann Folgendes festgelegt werden:

- Für jeden Tag (Datum) existiert eine Definition, ob dieser berücksichtigt wird oder nicht. Diese Definition kann beispielsweise durch Angabe von Wochentagen (z.B. Montag) oder durch eine explizite Angabe von Datumswerten mittels eines Kalenders (z.B. 24.05.2016) erfolgen. Eine solche Definition kann auch für Wochen, Monate, Quartale, etc. vorgesehen sein.
- Für jeden Tag existiert eine Definition, welche Stunden des Tags zu berücksichtigen sind oder nicht. Dies kann beispielsweise durch Angabe der Stunden eines Wochentages (z.B. Montag: 08:00 bis 17:00) oder durch die explizite Angabe der Stunden zu einem bestimmten Datum mittels eines Kalenders (z.B. 24.05.2016: 08:00 bis 17:00) erfolgen. Eine solche Definition kann auch für Wochen, Monate, Quartale, etc. vorgesehen sein. Beispielsweise kann auf Wochenbasis definiert werden, welche Wochentage zu berücksichtigen sind, oder auf Monatsbasis, welche Tage zu berücksichtigen sind.
- Die Maximale Netto-Dauer eines Tages ist die Summe der aktiven Tagesintervalle dieses Tages.

Es können auch mehrere Kalender vorgesehen sein, die gleichzeitig berücksichtigt werden können. Beispielsweise kann mittels eines ersten Kalenders angegeben werden, welche Wochen eines Jahres zu berücksichtigen sind, während mittels eines zweiten Kalenders angeben werden kann, welche Tage dieses Jahres nicht zu berücksichtigen sind. So können etwa Ausnahmen auf Tagesbasis für die in dem ersten Kalender angegebenen Wochen definiert werden.

Zur einfacheren Verarbeitung kann für jeden Zeitstempel das Datum als fortlaufende Zahl (beispielsweise als Julianisches Datum) und die Uhrzeit als Zeitangabe ausreichender Präzision (beispielsweise Millisekunden seit 00:00 Uhr) verwendet werden.

Wird die Differenz in Tagen berechnet, dann kann die Uhrzeit-Komponente des Zeitstempels ignoriert werden und die Berechnung lediglich auf der Datums-Komponente ausgeführt werden.

Für das Transformieren des Zeitstempels wird außerdem die Netto-Dauer der Zeitangabe in einer vorbestimmten Einheit (z.B. Stunden, Minuten oder Sekunden) benötigt. Die Netto-Dauer entspricht beispielsweise den Netto-Stunden (bzw. Netto-Minuten bzw. Netto-Sekunden) des Zeitstempels seit 00:00 Uhr.

Hierzu ein Beispiel: Ist für einen Tag ein zu berücksichtigendes Zeitintervall von 08:00 bis 17:00 Uhr festgelegt, so ist die Netto-Dauer auf Minutenbasis von 03:00 Uhr ebenso wie die Netto-Dauer von 07:00 Uhr jeweils 0 Minuten. Die Netto-Dauer von 09:00 Uhr ist 60 Minuten. Die Netto-Dauer von 17:00 Uhr ist 540 Minuten. Die Netto-Dauer von 23:00 Uhr ist 540 Minuten und entspricht damit der maximalen Netto-Dauer dieses Tages, weil das Intervall 17:00 bis 23:00 Uhr unberücksichtigt bleibt.

Die Tages-Gesamt-Nettozeit ist die Nettozeit eines gesamten Tages.

Die Transformation der Zeitstempel wird nun nach folgendem Verfahren durchgeführt:
In einem ersten Schritt wird eine Initialisierung durchgeführt, die umfasst

- der Ergebnisvektor wird als Null-Vektor mit gleicher Dimension wie der Zeitstempel-Vektor initialisiert;
- der aktuelle Tages-Offset wird mit dem Tages-Offset des ersten Zeitstempels initialisiert;
- der aktuelle Uhrzeit-Offset wird mit der Netto-Dauer des ersten Zeitstempels initialisiert;
- der aktuelle Offset-Wert wird mit 0 initialisiert; und
- dem Ergebnisvektor wird der aktuelle Offset-Wert zugewiesen.

In einem zweiten Schritt wird für alle Zeitstempel im Zeitstempel-Vektor iterativ folgendes Verfahren durchgeführt:

- solange der Tages-Offset des nächsten Zeitstempels größer als der aktuelle Tages-Offset ist:

  - erhöhe den Offset-Wert um die Netto-Dauer des aktuellen Tages (wenn der Tag nicht berücksichtigt wird, dann ist dies 0) abzüglich dem aktuellen Uhrzeit-Offset;
  - erhöhe den aktuellen Tages-Offset um 1; und
  - setze den aktuellen Uhrzeit-Offset auf 0;

- ist der Tages-Offset des nächsten Zeitstempels gleich dem aktuellen Tages-Offset:

  - erhöhe den aktuellen Offset-Wert um die Differenz zwischen aktuellem Uhrzeit-Offset und der Netto-Dauer des nächsten Zeitstempels;
  - weise dem Ergebnisvektor an der Position des nächsten Zeitstempels den aktuellen Offset-Wert zu; und
  - beginne mit dem nächsten Zeitstempel.

Im Ergebnis können anhand der so transformierten Zeitstempel Netto-Zeiten zwischen zwei beliebigen Zeitstempeln aus der Menge aller Zeitstempel berechnet werden.

In einer vorteilhaften Ausgestaltung der Erfindung werden die Zeitangaben der Prozessschritte des Prozessprotokolls in einem Dictionary Encoding gespeichert. Das Verfahren zur Bestimmung der Netto-Dauer kann direkt auf dem Dictionary Encodierten Zeitangaben und damit auf den komprimierten Daten durchgeführt werden.

In einer weiteren vorteilhaften Ausgestaltung der Erfindung sind die Werte im Dictionary in aufsteigender Form sortiert. Damit entfällt das vorherige Sortieren zur Bestimmung der Netto-Dauer.

Im einfachsten Fall kann die Durchlaufzeit, d.h. die Netto-Durchlaufzeit einer kompletten Prozessinstanz zwischen dem ersten Prozessschritt und dem letzten Prozessschritt der Prozessinstanz berechnet werden. Es ist aber auch möglich die Netto-Durchlaufzeit eines Teilprozesses der Prozessinstanz zu berechnen, d.h. die Netto-Durchlaufzeit zwischen Prozessschritten der Prozessinstanz die verschieden von dem ersten Prozessschritt bzw. verschieden von dem letzten Prozessschritt sind.

Die Auswahl der Prozessschritte, zwischen denen die Netto-Durchlaufzeit berechnet werden soll, kann durch den Benutzer an einer Benutzerschnittstelle vorgenommen werden.

Alternativ oder zusätzlich kann die Auswahl der Prozessschritte, zwischen denen die Netto-Durchlaufzeit berechnet werden soll, auch regelbasiert erfolgen. Beispiele hierfür sind:

- Erstes Auftreten eines bestimmten Prozessschrittes innerhalb einer Prozessinstanz;
- Letztes Auftreten eines bestimmten Prozessschrittes innerhalb einer Prozessinstanz;
- Beliebiges Auftreten eines bestimmten Prozessschrittes innerhalb einer Prozessinstanz;
- Erstes Auftreten eines beliebigen Prozessschrittes innerhalb einer Prozessinstanz;
- Letztes Auftreten eines beliebigen Prozessschrittes innerhalb einer Prozessinstanz;
- Prozessschritt mit einer vorbestimmten Kennung.

Diese Liste der Beispiele für die regelbasierte Auswahl von Prozessschritten ist nicht abschließend. Es können auch andere Regeln zur Auswahl von Prozessschritten vorgesehen sein.

Für mehrere Prozessinstanzen können solche Netto-Durchlaufzeiten berechnet werden. Insbesondere können für alle in dem Prozessprotokoll enthaltenen Prozessinstanzen solche Netto-Durchlaufzeiten berechnet werden. Aus den berechneten Netto-Durchlaufzeiten kann dann beispielsweise eine mittlere Netto-Durchlaufzeit für mehrere oder alle Prozessinstanzen eines Prozessprotokolls berechnet werden. In einem weiteren Beispiel können auch jene Prozessinstanzen aus dem Prozessprotokoll selektiert werden, deren Netto-Durchlaufzeit ein vorbestimmtes Kriterium erfüllt (z.B. deren Netto-Durchlaufzeit kleiner als 5 Tage ist).

Nachfolgend wird erläutert, wie parallel laufende Unterprozesse von Prozessinstanzen erkannt werden können.

Ein Prozess kann aus mehreren Unterprozessen bestehen, wobei die Unterprozesse parallel ausgeführt worden sein können. Unterprozesse können ihrerseits ebenfalls wieder aus Unterprozessen bestehen, die ebenfalls parallel ausgeführt worden sein können. Das Erkennen von parallel laufenden Unterprozessen alleine anhand des Attributes "Order" ist in den meisten Fällen nicht möglich. Das Erkennen von parallel laufenden Unterprozessen ist allerdings für das korrekte Ermitteln von Prozessgraphen oder Prozesshierarchien mittels Prozessoperatoren erforderlich, was mit aus dem Stand der Technik bekannten Verfahren nicht gewährleistet werden kann.

Hierfür ist erfindungsgemäß eine erweiterte Form der Datenstruktur des Prozessprotokolls vorgesehen, die ebenfalls in Fig. 2 gezeigt ist. Diese erweiterte Form der Datenstruktur weist lediglich zwei zusätzliche Attribute auf, nämlich "ParentID" und "SubProcessID".

Das Attribut "SubProcessID" speichert hierbei eine eindeutige Kennung für einen Unterprozess eines Prozesses oder für einen Unterprozess eines Unterprozesses. Das Attribut "ParentID" gibt an, zu welchem übergeordneten Prozess ein Unterprozess gehört. Mit diesen beiden Attributen wird erfindungsgemäß eine Hierarchie von Prozessen beschrieben, wobei Unterprozesse innerhalb der Hierarchie parallel ausgeführt worden sein können. Diese Parallelität wird in jedem Fall erkannt und zwar unabhängig von der Hierarchietiefe.

Erfindungsgemäß ist es darüber hinaus möglich, die Werte der Attribute "ParentID" und "SubProcessID" auf Basis anderer, in den Daten enthaltener Merkmale zu bestimmen. Die in den Attributen "ParentID" und "SubProcessID" enthaltenen Informationen können auch in anderer Form oder in einer anderen Struktur gespeichert werden.

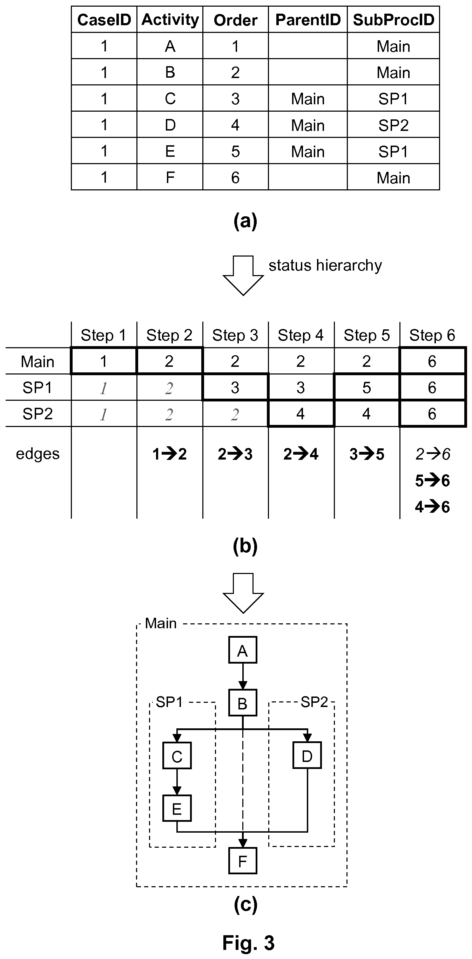

Mit der erweiterten Form der Datenstruktur wird es erfindungsgemäß möglich, ein Aufteilen eines Prozesses in parallele Unterprozesse und ein Zusammenführen paralleler Unterprozesse in linearer Zeit zu berechnen. Dadurch können auch parallel laufende Unterprozesse effizient und insbesondere korrekt analysiert werden. Versuche haben gezeigt, dass damit alle Punkte innerhalb eines Prozesses, an denen sich der Prozess in parallele Unterprozesse aufteilt oder an denen parallele Unterprozesse zusammenlaufen, für Prozessprotokolle mit mehreren Millionen Datensätzen in einem Bruchteil einer Sekunde berechnet werden können. Die Berechnung der Hierarchie von Prozessen bzw. das Ermitteln von parallel laufenden Prozessen wird nachfolgend mit Bezug auf Fig. 3 näher beschrieben.

Sofern die Hierarchietiefe maximal 1 ist (d.h. wenn ein Prozess zwar Unterprozesse aufweist, diese Unterprozesse ihrerseits aber keine Unterprozesse aufweisen), kann auf das Attribut "ParentID" verzichtet werden.

**Fig. 3** zeigt ein Beispiel eines Prozessprotokolls (Fig. 3(a)), einer daraus ermittelten Zustandshierarchie (Fig. 3 (b)) und eines entsprechenden Graphen (Fig. 3 (c)).

Anhand von Fig. 3 wird das Ermitteln von parallelen Unterprozessen und das Ermitteln der Prozesshierarchie basierend auf dem Prozessprotokoll näher beschrieben.

Fig. 3 (a) zeigt ein Prozessprotokoll, in dem sechs Aktivitäten (Prozessschritte) A bis F zu dem Prozess mit der CaseID = 1 gespeichert sind. Dieser Prozess umfasst zwei Teilprozesse, die parallel zur Ausführung gekommen sind. Die beiden Teilprozesse umfassen keine weiteren Teilprozesse, sodass das Attribut "ParentID" nicht unbedingt notwendig ist. Die zu den jeweiligen Teilprozessen gehörenden Aktivitäten werden durch die Werte des Attributes "SubProcID" identifiziert.

In einem ersten Schritt wird aus dem Prozessprotokoll eine Zustandshierarchie ermittelt. Die ermittelte Zustandshierarchie ist in Fig. 3 (b) gezeigt. Der Aufbau der Zustandshierarchie erfolgt vorteilhafter Weise im Arbeitsspeicher, wobei das Prozessprotokoll in einem Iterationsschritt sequentiell verarbeitet wird. Die Zustandshierarchie kann erfindungsgemäß also mit einer Zeitkomplexität von O(n) ermittelt werden.

Anhand von Fig. 3 (b) wird erläutert, wie die Zustandshierarchie erzeugt wird.

In einem ersten Schritt (Step 1) wird der erste Datensatz (Order = 1) des Prozessprotokolls verarbeitet. Dieser erste Datensatz entspricht dem ersten Schritt des Prozesses. Der Wert des Attributs "SubProcID" ordnet diesen ersten Datensatz einem Teilprozess zu. In dem vorliegenden Fall ist der Teilprozess der Hauptprozess selbst. Der übergeordnete Prozess ist daher nicht gesetzt.

In dem ersten Schritt (Step 1) wird der Teilprozess "Main" der Zustandshierarchie hinzugefügt. Ferner wird dem Teilprozess "Main", der gleichzeitig der Hauptprozess ist, ein Zeiger auf den ersten Datensatz zugeordnet. Das heißt, in der Zustandshierarchie wird dem Teilprozess "Main" der Datensatz "1" zugeordnet.

In einem zweiten Schritt (Step 2) wird der zweite Datensatz (Order = 2) des Prozessprotokolls verarbeitet. Dieser zweite Datensatz entspricht dem zweiten Schritt des Prozesses und ist ebenfalls dem Teilprozess "Main" (= Hauptprozess) zugeordnet. In der Zustandshierarchie wird daher dem Teilprozess "Main" der Datensatz "2" zugeordnet.

Nach dem zweiten Schritt (Step 2) sind in der Zustandshierarchie dem Teilprozess "Main" zwei Werte zugeordnet. Weil sich der zweite hinzugefügte Wert (2) von dem ersten hinzugefügten Wert (1) unterscheidet, wird in dem zweiten Schritt zusätzlich eine Kante "1→2" der Zustandshierarchie hinzugefügt. Die in diesem Schritt und in den nachfolgenden Schritten hinzugefügten Kanten "x→y" geben eine Vorgänger-/Nachfolger-Beziehung an, nämlich "y" ist Nachfolger von "x".

In einem dritten Schritt (Step 3) wird der dritte Datensatz (Order = 3) des Prozessprotokolls verarbeitet. Dieser dritte Datensatz entspricht dem dritten Schritt des Prozesses. Im Unterschied zu den beiden ersten Datensätzen ist dieser dritte Datensatz dem Teilprozess "SP1" zugeordnet. Das Attribut "ParentID" des dritten Datensatzes gibt an, dass dieser dem übergeordneten Teilprozess "Main" (= Hauptprozess) zugeordnet ist, d.h. der dritte Datensatz gehört zu dem Prozess "SP1", der ein Teilprozess des Prozesses "Main" ist.

Der Zustandshierarchie wird in dem dritten Schritt (Step 3) der Teilprozess "SP1" hinzugefügt. Ferner wird dem Teilprozess "SP1" in der Zustandshierarchie der Datensatz "3" zugeordnet. Der dem Teilprozess "Main" in dem zweiten Schritt (Step 2) zugeordnete Datensatz "2" hat sich nicht geändert und bleibt damit dem Teilprozess "Main" zugeordnet.

Weil der Wert "SP1" des Attributes "SubProcID" verschieden von dem Wert "Main" des Attributes "ParentID" ist und weil dem Teilprozess "SP1" in dem zweiten Schritt (Step 2) kein Wert zugeordnet wurde, handelt es sich bei dem dritten Datensatz um den ersten Prozessschritt des Teilprozesses "SP1". Der Vorgänger des dritten Prozessschrittes ist demnach jener Prozessschritt des übergeordneten Prozesses, der zuletzt der Zustandshierarchie hinzugefügt wurde. Im vorliegenden Beispiel ist dies der zweite Prozessschritt, der im zweiten Schritt (Step 2) hinzugefügt wurde. In dem dritten Schritt wird daher zusätzlich eine Kante "2→3" der Zustandshierarchie hinzugefügt.

In einem vierten Schritt (Step 4) wird der vierte Datensatz (Order = 4) des Prozessprotokolls verarbeitet. Dieser vierte Datensatz entspricht dem vierten Schritt des Prozesses. Im Unterschied zu dem dritten Datensatz ist dieser vierte Datensatz dem Teilprozess "SP2" zugeordnet, der dem übergeordneten Teilprozess "Main" (= Hauptprozess) zugeordnet ist, d.h. der vierte Datensatz gehört zu dem Prozess "SP2", der ein Teilprozess des Prozesses "Main" ist.

Weil sowohl der Teilprozess "SP1" als auch der Teilprozess "SP2" dem selben Prozess "Main" zugeordnet sind, handelt es sich bei den beiden Teilprozessen "SP1" und "SP2" um Prozesse, die parallel ausgeführt wurden.

In dem vierten Schritt wird der Teilprozess "SP2" der Zustandshierarchie hinzugefügt. Ferner wird dem Teilprozess "SP2" in der Zustandshierarchie der Datensatz "4" zugeordnet. Der dem Teilprozess "Main" in dem dritten Schritt (Step 3) zugeordnete Datensatz "2" ändert sich nicht und bleibt damit dem Teilprozess "Main" zugeordnet. Der dem Teilprozess "SP1" in dem dritten Schritt (Step 3) zugeordnete Datensatz "3" wird ebenfalls nicht geändert und bleibt damit dem Teilprozess "SP1" zugeordnet.

Weil der Wert "SP2" des Attributes "SubProcID" verschieden von dem Wert "Main" des Attributes "ParentID" ist und weil dem Teilprozess "SP2" in dem dritten Schritt (Step 3) kein Wert zugeordnet wurde, handelt es sich bei dem vierten Datensatz um den ersten Prozessschritt des Teilprozesses "SP2". Der Vorgänger des vierten Prozessschrittes ist demnach jener Prozessschritt des übergeordneten Prozesses, der zuletzt der Zustandshierarchie hinzugefügt wurde. Im vorliegenden Beispiel ist dies der zweite Prozessschritt, der im zweiten Schritt (Step 2) hinzugefügt wurde. In dem dritten Schritt wird daher zusätzlich eine Kante "2→4" der Zustandshierarchie hinzugefügt.

In einem fünften Schritt (Step 5) wird der fünfte Datensatz (Order = 5) des Prozessprotokolls verarbeitet. Dieser fünfte Datensatz ist dem Teilprozess "SP1" zugeordnet, der dem übergeordneten Teilprozess "Main" (= Hauptprozess) zugeordnet ist, d.h. der fünfte Datensatz gehört zu dem Prozess "SP1", der ein Teilprozess des Prozesses "Main" ist. Ferner wird dem Teilprozess "SP1" in der Zustandshierarchie der Datensatz "5" zugeordnet. Der dem Teilprozess "Main" in dem vierten Schritt (Step 4) zugeordnete Datensatz "2" ändert sich nicht und bleibt damit dem Teilprozess "Main" zugeordnet. Der dem Teilprozess "SP2" in dem vierten Schritt (Step 3) zugeordnete Datensatz "4" wird ebenfalls nicht geändert und bleibt damit dem Teilprozess "SP2" zugeordnet.

Weil der Teilprozess "SP1" bereits der Zustandshierarchie hinzugefügt wurde (in dem dritten Schritt (Step 3)), handelt es sich bei dem fünften Datensatz um einen Prozessschritt des Teilprozesses "SP1", der nicht der erste Prozessschritt des Teilprozesses "SP1" ist.

Der Vorgänger des fünften Prozessschrittes ist demnach jener Prozessschritt des Teilprozesses "SP1", der zuletzt der Zustandshierarchie hinzugefügt wurde. Im vorliegenden Beispiel ist dies der dritte Prozessschritt, der im dritten Schritt (Step 3) hinzugefügt wurde. In dem fünften Schritt wird daher zusätzlich eine Kante "3→75" der Zustandshierarchie hinzugefügt.

In einem sechsten Schritt (Step 6) wird der sechste Datensatz (Order = 6) des Prozessprotokolls verarbeitet. Dieser sechste Datensatz ist dem Teilprozess "Main" zugeordnet, der gleichzeitig der Hauptprozess ist (ParentID = Main).

Dem Teilprozess "Main" wird der Datensatz "6" zugeordnet. Aus der Zustandshierarchie ergibt sich nun, dass der aktuelle Datensatz (= 6) des Teilprozesses "Main" verschieden von dem Wert (= 2) ist, der in dem fünften Schritt (Step 5) dem Teilprozesses "Main" zugeordnet wurde. Zudem ist bekannt, dass der Teilprozesses "Main" mehrere Teilprozesse (im vorliegenden Beispiel SP1 und SP2) umfasst. Der sechste Prozessschritt ist damit ein Prozessschritt, bei dem die untergeordneten Prozesse (= Teilprozesse SP1 und SP2) zusammengeführt werden. Der sechste Prozessschritt bildet damit einen sogenannten "join point". Daher wird in der Zustandshierarchie auch den untergeordneten Prozessen jeweils der aktuelle Wert (= 6) des Teilprozesses "Main" zugeordnet.

Der sechste Prozessschrittes hat demnach zwei Vorgänger, nämlich die jeweils zuletzt hinzugefügten Prozessschritte der Teilprozesse "SP1" und "SP2". In dem sechsten Schritt werden daher zusätzliche die Kanten, "5→6" und "4→6" der Zustandshierarchie hinzugefügt.

Optional kann eine weitere Kante "2→6" vom vorherigen Zustand des Teilprozesses "Main" eingefügt werden.

Aus der so erzeugten Zustandshierarchie bzw. aus den Kanten der Zustandshierarchie ergibt sich nun eine Prozesshierarchie, die parallel ausgeführte Teilprozesse umfassen kann und die beispielsweise als Baumstruktur oder als Graph dargestellt werden kann.

Fig. 3 (c) zeigt einen aus der Zustandshierarchie gemäß Fig. 3 (b) erzeugten Graphen. Erkennbar sind hier die parallel laufenden Teilprozesse "SP1" und "SP2" als Teile des Hauptprozesses "Main". Die Kante "2→6" ist hier als gestrichelter Pfeil dargestellt.

Dieses Verfahren hat den Vorteil, dass die Hierarchie eines Prozesses, der parallel ausgeführte Prozesspfade umfasst, mit einer Zeitkomplexität von O(n) ermittelt werden kann, und zwar unabhängig von der Hierarchietiefe des Prozesses.

Weil auch parallele Pfade innerhalb eines Prozesses korrekt ermittelt werden können, liefert auch eine Prozessanalyse von Prozessen mit parallelen Prozesspfaden immer ein korrektes Ergebnis. So kann beispielsweise eine mittlere Durchlaufzeit für Prozesse ermittelt werden, die mit dem Prozessschritt "A" beginnen und bei denen die Prozessschritte "C" und "D" parallel ausgeführt werden. Bei den aus dem Stand der Technik bekannten Verfahren kann nicht in jedem Fall gewährleistet werden, dass eigentlich parallel ausgeführte Prozessschritte tatsächlich auch als solche erkannt werden. So kann es beispielsweise vorkommen, dass beim Ermitteln einer mittleren Durchlaufzeit für Prozesse, die mit dem Prozessschritt "A" beginnen und bei denen die Prozessschritte "C" und "D" parallel ausgeführt werden, nicht alle ausgeführten Prozesse berücksichtigt werden, obwohl sie eigentlich dem Filterkriterium entsprechen würden. Das führt zwangsläufig zu einer falschen mittleren Durchlaufzeit.

Der Wesentliche Vorteil der Erfindung liegt darin, dass eine Prozessanalyse direkt auf dem Prozessprotokoll durchgeführt wird, und zwar unabhängig davon, ob die in dem Prozessprotokoll gespeicherten Daten "einfache" Prozesse oder "komplexe" Prozesse, die verschachtelte und parallel ausgeführte Teilprozesse umfassen können, beschreiben.

## Patentansprüche

1. Computer-implementiertes Verfahren zum Ermitteln einer Netto-Durchlaufzeit zwischen Prozessschritten einer Prozessinstanz in einem Computersystem, das einen Prozessor aufweist, wobei eine Speichereinrichtung operativ mit dem Prozessor des Computersystems gekoppelt ist, wobei die Prozessinstanz eine Anzahl von Prozessschritten umfasst, die die Prozessschritte umfassen, zwischen denen die Netto-Durchlaufzeit ermittelt wird, wobei für jeden Prozessschritt zumindest eine eindeutige Kennung und eine Zeitangabe gespeichert werden, wobei jeder Prozessschritt als Datensatz in einem Prozessprotokoll in der Speichereinrichtung des Computersystems gemäß einer vorbestimmten Datenstruktur gespeichert wird, wobei die Speichereinrichtung ein Arbeitsspeicher ist, wobei

   - die vorbestimmte Datenstruktur zumindest umfasst:

      - ein erstes Attribut, in dem eine eindeutige Kennung der Prozessinstanz des jeweiligen Prozessschrittes gespeichert wird;
      - ein zweites Attribut, in dem die eindeutige Kennung des jeweiligen Prozessschrittes gespeichert wird; und
      - ein drittes Attribut, in dem mit der Zeitangabe die Reihenfolge der Prozessschritte innerhalb einer Prozessinstanz gespeichert wird; wobei in der Datenstruktur die zu einer Prozessinstanz gehörenden Prozessschritte sortiert nach dem dritten Attribut in dem Arbeitsspeicher an benachbarten Adressen gespeichert sind,

   - der Prozessor zum Ermitteln der Netto-Durchlaufzeit der Prozessinstanz einen Kalender verwendet, in dem eine Anzahl von Zeitintervallen gespeichert sind, die für das Ermitteln der Netto-Durchlaufzeit zu berücksichtigen sind, und die Prozessschritte in einem Stream sequenziell und in der richtigen Reihenfolge verarbeitet,
   - der Prozessor einen Abgleich zwischen den zu den Prozessschritten gespeicherten Zeitangaben und den in dem Kalender gespeicherten Zeitintervallen durchführt, wobei nach dem Abgleich eine Netto-Durchlaufzeit zwischen zwei Prozessschritten berechnet wird.

2. Verfahren nach Anspruch 1, wobei der Prozessor beim Abgleich für jeden Prozessschritt eine relative Zeitangabe berechnet und nach dem Abgleich durch Ermitteln einer Differenz der relativen Zeitangaben der beiden Prozessschritte die Netto-Durchlaufzeit zwischen diesen beiden Prozessschritten berechnet.

3. Verfahren nach Anspruch 1, wobei in der Datenstruktur der Prozessschritt mit der kleinsten Zeitangabe den ersten Datensatz und der Prozessschritt mit der größten Zeitangabe den letzten Datensatz bilden.

4. Verfahren nach Anspruch 1, wobei der Kalender einen dynamischen Kalender umfasst, der zum Zeitpunkt der Ausführung des Verfahrens, vorzugsweise ad hoc definiert wird.

**5.** Verfahren nach Anspruch 4, wobei der Kalender einen ersten Kalender umfasst, bei dem die Zeitintervalle jeweils durch Angabe eines Startzeitpunktes und eines Endzeitpunktes explizit festgelegt werden und/oder wobei der Kalender einen zweiten Kalender umfasst, bei dem die Zeitintervalle jeweils durch Angabe einer Regel oder mehrerer Regeln festgelegt werden.

**6.** Verfahren nach Anspruch 1, wobei für die zu den Prozessschritten gespeicherten Zeitangaben ein Netto-Offset relativ zu einem Referenzzeitpunkt berechnet wird, wobei der Netto-Offset des ersten Prozessschrittes vorzugsweise den Wert Null aufweist, und wobei die berechneten Netto-Offsets dem jeweiligen Prozessschritt zugeordnet werden, wobei die Differenz der Netto-Offsets zweier Prozessschritte die Netto-Durchlaufzeit zwischen diesen beiden Prozessschritten ist.

**7.** Verfahren nach Anspruch 6, wobei in die Berechnung des Netto-Offsets nur die in dem Kalender als zu berücksichtigend angegebenen Zeitintervalle mit einbezogen werden, wobei der Netto-Offset eines Prozessschrittes die Summe der zwischen der Zeitangabe des ersten Prozessschrittes und der Zeitangabe des Prozessschrittes, für den der Netto-Offset berechnet wird, liegenden Zeitintervalle ist, wobei für den Fall, dass die Zeitangabe des Prozessschrittes, für den der Netto-Offset berechnet wird, in einem Zeitintervall des Kalenders liegt, nur jener Teil dieses Zeitintervalls berücksichtigt wird, der zwischen der Zeitangabe des ersten Prozessschrittes und der Zeitangabe des Prozessschrittes, für den der Netto-Offset berechnet wird, liegt, und wobei für den Fall, dass die Zeitangabe des ersten Prozessschrittes in einem Zeitintervall des Kalenders liegt, nur jener Teil dieses Zeitintervalls berücksichtigt wird, der zwischen der Zeitangabe des ersten Prozessschrittes und der Zeitangabe des Prozessschrittes, für den der Netto-Offset berechnet wird, liegt.

**8.** Verfahren nach Anspruch 1, wobei die zu den Prozessschritten gespeicherten Zeitangaben normiert werden.

**9.** Verfahren nach Anspruch 8, wobei das Normieren ein Abbilden der Zeitangaben auf eine reelle Zahl umfasst oder wobei das Normieren ein Abbilden der Zeitangaben auf ein julianisches Datum umfasst.

**10.** Verfahren nach Anspruch 1, wobei die Zeitangaben der Prozessschritte in komprimierter Form, insbesondere gemäß eines Dictionary Encoding Verfahrens gespeichert werden.

**11.** Verfahren nach Anspruch 10, wobei der Abgleich auf Basis der komprimierten Zeitangaben durchgeführt wird.

**12.** Verfahren nach Anspruch 1, wobei die Prozessschritte der Prozessinstanz, zwischen denen die Netto-Durchlaufzeit ermittelt werden soll, auswählbar sind.

**13.** Verfahren nach Anspruch 12, wobei die Prozessschritte mittels Regeln auswählbar sind.

**14.** Verfahren nach Anspruch 13, wobei die Regeln ausgewählt sind aus der Gruppe zumindest umfassend

- erstes Auftreten eines bestimmten Prozessschrittes innerhalb einer Prozessinstanz,
- letztes Auftreten eines bestimmten Prozessschrittes innerhalb einer Prozessinstanz,
- beliebiges Auftreten eines bestimmten Prozessschrittes innerhalb einer Prozessinstanz,
- erstes Auftreten eines beliebigen Prozessschrittes innerhalb einer Prozessinstanz,
- letztes Auftreten eines beliebigen Prozessschrittes innerhalb einer Prozessinstanz,
- Prozessschritt mit einer vorbestimmten Kennung, und
- Kombinationen hiervon.

**Claims**

**1.** Computer-implemented method for determining a net throughput time between process steps of a process instance in a computer system which has a processor, wherein a memory device is operatively coupled to the processor of the computer system, wherein the process instance comprises a number of process steps which comprise the process steps between which the net throughput time is determined, wherein at least one unique identifier and one time indication are stored for each process step, wherein each process step is stored as a data record in a process log in the memory device of the computer system according to a predetermined data structure, wherein the memory device is a main memory, wherein

- the predetermined data structure at least comprises:

  - a first attribute in which a unique identifier of the process instance of the relevant process step is stored;
  - a second attribute in which the unique identifier of the relevant process step is stored; and
  - a third attribute in which, using the time indication, the sequence of the process steps within a process instance is stored;
  wherein, in the data structure, the process steps belonging to a process instance are stored in the main memory at adjacent addresses so as to be sorted according to the third attribute,

- the processor uses a calendar to determine the net throughput time of the process instance, in which calendar a number of time intervals are stored which are to be taken into account when determining the net throughput time, and processes the process steps in a stream, sequentially and in the correct sequence,
- the processor carries out a comparison between the time indications stored for the process steps and the time intervals stored in the calendar, wherein a net throughput time between two process steps is calculated after the comparison.

2. Method according to claim 1, wherein the processor calculates a relative time indication for each process step during the comparison and calculates the net throughput time between these two process steps by determining a difference between the relative time indications of the two process steps after the comparison.

3. Method according to claim 1, wherein, in the data structure, the process step having the lowest time indication forms the first data record and the process step having the greatest time indication forms the last data record.

4. Method according to claim 1, wherein the calendar comprises a dynamic calendar which is defined at the time of executing the method, preferably in an ad hoc manner.

5. Method according to claim 4, wherein the calendar comprises a first calendar in which the time intervals are explicitly specified in each case by identifying a start time and an end time and/or wherein the calendar comprises a second calendar in which the time intervals are specified by providing one rule or a plurality of rules in each case.

6. Method according to claim 1, wherein a net offset relative to a reference time is calculated for the time indications stored for the process steps, wherein the net offset of the first process step preferably has the value zero, and wherein the calculated net offsets are associated with the relevant process step, wherein the difference between the net offsets of two process steps is the net throughput time between these two process steps.

7. Method according to claim 6, wherein only the time intervals which are specified in the calendar for being taken into account are included in the calculation of the net offset, wherein the net offset of a process step is the sum of the time intervals between the time indication of the first process step and the time indication of the process step for which the net offset is calculated, wherein, if the time indication of the process step for which the net offset is calculated is in a time interval of the calendar, only the part of this time interval which is between the time indication of the first process step and the time indication of the process step for which the net offset is calculated is taken into account, and wherein, if the time indication of the first process step is in a time interval of the calendar, only the part of this time interval which is between the time indication of the first process step and the time indication of the process step for which the net offset is calculated is taken into account.

8. Method according to claim 1, wherein the time indications stored for the process steps are standardized.

9. Method according to claim 8, wherein the standardization comprises mapping the time indications to a real number or wherein the standardization comprises mapping the time indications to a Julian date.

10. Method according to claim 1, wherein the time indications of the process steps are stored in a compressed form, in particular according to a dictionary encoding method.

11. Method according to claim 10, wherein the comparison is carried out on the basis of the compressed time indications.

12. Method according to claim 1, wherein the process steps of the process instance between which the net throughput time is intended to be determined can be selected.

**13.** Method according to claim 12, wherein the process steps can be selected by means of rules.

**14.** Method according to claim 13, wherein the rules are selected from the group at least comprising:

- first occurrence of a particular process step within a process instance;
- last occurrence of a particular process step within a process instance;
- any occurrence of a particular process step within a process instance;
- first occurrence of any process step within a process instance;
- last occurrence of any process step within a process instance;
- process step having a predetermined identifier; and
- combinations of these.

**Revendications**

**1.** Procédé mis en œuvre par ordinateur permettant de déterminer un délai d'exécution net entre des étapes de processus d'une instance de processus dans un système informatique doté d'un processeur, dans lequel un dispositif de mémoire est couplé de manière opérationnelle au processeur du système informatique, l'instance de processus comprenant un certain nombre d'étapes de processus qui comprennent les étapes de processus entre lesquelles le délai d'exécution net est déterminé, au moins un identifiant unique et une indication temporelle étant enregistrés pour chaque étape de processus, chaque étape de processus étant enregistrée en tant qu'ensemble de données dans un journal de processus dans le dispositif de mémoire du système informatique conformément à une structure de données prédéterminée, le dispositif de mémoire étant une mémoire de travail, dans lequel

- la structure de données prédéterminée comprend au moins :

- un premier attribut dans lequel est enregistré un identifiant unique de l'instance de processus de l'étape de processus respective ;
- un deuxième attribut dans lequel est enregistré l'identifiant unique de l'étape de processus respective ; et
- un troisième attribut dans lequel l'ordre des étapes de processus est enregistré dans une instance de processus avec l'indication temporelle ;
dans lequel, dans la structure de données, les étapes de processus appartenant à une instance de processus sont enregistrées dans la mémoire de travail à des adresses voisines en étant triées selon le troisième attribut,

- le processeur utilise un calendrier pour déterminer le délai d'exécution net de l'instance de processus, calendrier dans lequel est enregistré un certain nombre d'intervalles de temps devant être pris en compte pour la détermination du délai d'exécution net, et le processeur traite, séquentiellement et dans le bon ordre, les étapes de processus dans un flux,
- le processeur effectue une comparaison entre les indications temporelles enregistrées pour les étapes de processus et les intervalles de temps enregistrés dans le calendrier, un délai d'exécution net entre deux étapes de processus étant calculé après la comparaison.

**2.** Procédé selon la revendication 1, dans lequel, lors de la comparaison, le processeur calcule une indication temporelle relative pour chaque étape de processus et, après la comparaison, calcule le délai d'exécution net entre ces deux étapes de processus en déterminant une différence entre les indications temporelles relatives des deux étapes de processus.

**3.** Procédé selon la revendication 1, dans lequel, dans la structure de données, l'étape de processus présentant la plus petite indication temporelle forme le premier ensemble de données, et l'étape de processus présentant la plus grande indication temporelle forme le dernier ensemble de données.

**4.** Procédé selon la revendication 1, dans lequel le calendrier comprend un calendrier dynamique qui est défini au moment de la mise en œuvre du procédé, de préférence ad hoc.

**5.** Procédé selon la revendication 4, dans lequel le calendrier comprend un premier calendrier dans lequel les intervalles de temps sont définis explicitement dans chaque cas en indiquant une heure de début et une heure de fin, et/ou dans lequel le calendrier comprend un second calendrier dans lequel les intervalles de temps sont définis dans chaque cas en indiquant une ou plusieurs règles.

6. Procédé selon la revendication 1, dans lequel un décalage net par rapport à un moment de référence est calculé pour les indications temporelles enregistrées pour les étapes de processus, le décalage net de la première étape de processus présentant de préférence la valeur zéro, et le décalage net calculé étant attribué à l'étape de processus respective, la différence entre les décalages nets de deux étapes de processus étant le délai d'exécution net entre ces deux étapes de processus.

7. Procédé selon la revendication 6, dans lequel seuls les intervalles de temps indiqués dans le calendrier comme devant être pris en compte sont inclus dans le calcul du décalage net, le décalage net d'une étape de processus étant la somme des intervalles de temps situés entre l'indication temporelle de la première étape de processus et l'indication temporelle de l'étape de processus pour laquelle le décalage net est calculé, dans lequel, dans le cas où l'indication temporelle de l'étape de processus pour laquelle le décalage net est calculé se situe dans un intervalle de temps du calendrier, seule est prise en compte la partie de cet intervalle de temps qui se situe entre l'indication temporelle de la première étape de processus et l'indication temporelle de l'étape de processus pour laquelle le décalage net est calculé, et dans lequel, dans le cas où l'indication temporelle de la première étape de processus se situe dans un intervalle de temps du calendrier, seule est prise en compte la partie de cet intervalle de temps qui se situe entre l'indication temporelle de la première étape du processus et l'indication temporelle de l'étape de processus pour laquelle le décalage net est calculé.

8. Procédé selon la revendication 1, dans lequel les indications temporelles enregistrées pour les étapes du processus sont normalisées.

9. Procédé selon la revendication 8, dans lequel la normalisation comprend le mappage des indications temporelles à un nombre réel, ou dans lequel la normalisation comprend le mappage des indications temporelles à une date julienne.

10. Procédé selon la revendication 1, dans lequel les indications temporelles des étapes du processus sont enregistrées sous une forme compressée, en particulier conformément à un procédé de codage par dictionnaire.

11. Procédé selon la revendication 10, dans lequel la comparaison est effectuée sur la base des indications temporelles compressées.

12. Procédé selon la revendication 1, dans lequel les étapes de processus de l'instance de processus entre lesquelles doit être déterminé le délai d'exécution net peuvent être sélectionnées.

13. Procédé selon la revendication 12, dans lequel les étapes de processus peuvent être sélectionnées au moyen de règles.

14. Procédé selon la revendication 13, dans lequel les règles sont sélectionnées dans le groupe comprenant au moins

   - la première occurrence d'une étape de processus spécifique dans une instance de processus,
   - la dernière occurrence d'une étape de processus spécifique dans une instance de processus,
   - une occurrence quelconque d'une étape de processus spécifique dans une instance de processus,
   - la première occurrence d'une étape de processus quelconque dans une instance de processus,
   - la dernière occurrence d'une étape de processus quelconque dans une instance de processus,
   - une étape de processus comportant un identifiant prédéterminé, et
   - des combinaisons de celles-ci.

**Fig. 1**

| CaseID | Activity | Order | ParentID | SubProcessID | FK |
|--------|----------|-------|----------|--------------|-----|
|        |          |       |          |              |     |

other (external) data

**Fig. 2**

| Partition 1 | Partition 2 | Partition 3 |
|-------------|-------------|-------------|
| Process A   | Process D   | Process H   |
| Process B   | Process E   | Process I   |
| Process C   | Process F   | Process J   |
|             | Process G   | Process K   |

**Fig. 2 (a)**

| CaseID | Activity | Order | ParentID | SubProcID |
|--------|----------|-------|----------|-----------|
| 1 | A | 1 | | Main |
| 1 | B | 2 | | Main |
| 1 | C | 3 | Main | SP1 |
| 1 | D | 4 | Main | SP2 |
| 1 | E | 5 | Main | SP1 |
| 1 | F | 6 | | Main |

**(a)**

⬇ status hierarchy

| | Step 1 | Step 2 | Step 3 | Step 4 | Step 5 | Step 6 |
|------|--------|--------|--------|--------|--------|--------|
| Main | 1 | 2 | 2 | 2 | 2 | 6 |
| SP1 | *1* | *2* | 3 | 3 | 5 | 6 |
| SP2 | *1* | *2* | *2* | 4 | 4 | 6 |
| edges | | 1→2 | 2→3 | 2→4 | 3→5 | 2→6<br>5→6<br>4→6 |

**(b)**

⬇

**(c)**

**Fig. 3**

APE-Engine

Client

APE-
Statement

APE-Compiler

Meta
Data

Process
Protocol

Executables

Postprocessing

Results

Postprocessing

**Fig. 4**

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **W. VAN DER AALST.** *Process Mining Discovery, Conformance and Enhancement of Business Processes,* 2011